(19)

Europäisches
Patentamt
European
Patent Office
Office européen
des brevets

(11)    **EP 1 742 088 A1**

(12)    **EUROPEAN PATENT APPLICATION**
published in accordance with Art. 158(3) EPC

(43) Date of publication:
**10.01.2007 Bulletin 2007/02**

(51) Int Cl.:
*G02B 5/02* (2006.01)    *F21V 7/22* (2006.01)

(21) Application number: **05736691.6**

(22) Date of filing: **25.04.2005**

(86) International application number:
**PCT/JP2005/008332**

(87) International publication number:
**WO 2005/106539 (10.11.2005 Gazette 2005/45)**

(84) Designated Contracting States:
**AT BE BG CH CY CZ DE DK EE ES FI FR GB GR HU IE IS IT LI LT LU MC NL PL PT RO SE SI SK TR**

(30) Priority: **28.04.2004 JP 2004134298**
**28.04.2004 JP 2004134354**

(71) Applicant: **NIPPON STEEL CORPORATION**
**Tokyo 100-8071 (JP)**

(72) Inventors:
• **KOMURO, Atsushi,**
**NIPPON STEEL CORP. KIMITSU WORKS**
**Kimitsu-shi Chiba 2991141 (JP)**
• **INOUE, Ikuya,**
**NIPPON STEEL CORP. KIMITSUWORKS**
**Kimitsu-shi Chiba 2991141 (JP)**

• **YOSHIDA, Kengo,**
**NIPPON STEEL CORP. KIMITSU WORKS**
**Kimitsu-shi, Chiba 2991141 (JP)**
• **INADA, Kenji,**
**NIPPON STEEL CORP. KIMITSU WORKS**
**Kimitsu-shi Chiba 2991141 (JP)**
• **NISHIOKA, Ryoji,**
**NIPPON STEEL CORP. KIMITSU WORKS**
**Kimitsu-shi, Chiba 2991141 (JP)**
• **UEDA, Kohei,**
**NIPPON STEEL CORPORATION**
**Futtsu-shi, Chiba 2938511 (JP)**
• **KANAI, Hiroshi,**
**c/o NIPPON STEEL CORPORATION**
**Futtsu-shi, Chiba 2938511 (JP)**

(74) Representative: **Vossius & Partner**
**Siebertstrasse 4**
**81675 München (DE)**

(54)    **VISIBLE RAY REFLECTION PLATE AND ELECTRIC/ELECTRONIC DEVICE USING THE SAME**

(57)    There are provided a new visible ray reflection plate capable of making the light from a lighting device and an electric/electronic device emitting a light signal brighter and an electric/electronic device using the new visible ray reflection plate. The visible ray reflection plate 1 includes a white resin sheet 5 superimposed on a metal plate 3 which may be plated wherein the area ratio of air bubbles existing at the boundary between the white resin sheet 5 and the metal plate 3 which may be plated is not greater than 5%. Alternatively, the visible ray reflection plate 1 includes a white resin sheet 5' having a visible ray diffuse reflectance of 0.07 or above at the surface of 555 nm and infrared total radiation ratio 0.60 or above at the area of the wave number 600 to 3000 cm$^{-1}$ measured at a predetermined temperature from 80 degrees C to 200 degrees C which resin sheet is arranged on one side of the metal plate 3 which may be plated.

**Fig.1**

EP 1 742 088 A1

## Description

TECHNICAL FIELD

The present invention relates to a visible light reflector, and to an electrical/electronic device, such as a lighting device, AV device, mobile device, plasma display, or liquid crystal television, which has the function of emitting visible light and a sheet for reflecting the visible light emitted by the same.

BACKGROUND ART

A lighting device, AV device, electronic device, mobile device, liquid crystal television, plasma display, etc. have the function of emitting visible light to brighten the surroundings, transmitting optical signals, or displaying optical images. Some of these devices are provided with reflectors and reflect the light by these reflectors so as to achieve improvement of the luminance of the light, change in the direction of the light, etc. To avoid a drop in the amount of light when light is reflected by these reflectors, the surfaces of the reflectors are required to have high visible light reflectances. In the past, as means for improving the reflectances of reflector surfaces, the metal has been polished to a mirror finish, white colored coatings with high reflectances have been applied, etc. For example, NSC's catalog "VIEWKOTE" describes precoated steel sheet for lighting device reflectors given white coatings in advance.

Further, JP 2002-90515 A, JP 2002-98808 A, JP 2002-98811 A, JP 2002-120330 A, JP 2001-71441 A, JP 2001-121665 A, JP 2001-226501 A, JP 2001-228313 A, Mitsui Chemicals' catalog "White Reflectors", etc. describe the technology of reflection sheets improved in the diffuse reflectance of visible light by introducing into the resin sheets fine air bubbles. These reflection sheets, as described in Mitsui Chemicals' catalog "White Reflectors", are generally used adhered to aluminum sheets, brass sheets, stainless steel sheets, or other naked metal or PET films or other substrates.

On the other hand, along with the increased use of electronics in electrical products in recent years, the problem of the heat generated by the electrical products has arisen. According to JP 2001-297623 A, the luminance of a fluorescent tube used as a general light source depends on the ambient temperature and there is a peak temperature at which the luminance becomes the greatest. Therefore, there have been disadvantages such that even if increasing the power supplied to the light source, the ambient temperature will rise during use, so a rise in the luminance commensurate with the increase in power will not be obtained or even if the luminance rises temporarily, it will fall along with the elapse of time. As a means for solving this heat problem, JP 2001-297623 A discloses technology for raising the heat dissipation ability by providing air holes in the reflector. Also, JP 5-93910 A discloses technology for raising the heat dissipation ability by using a metal with a high heat conductivity as a heat sink. Further, JP 10-199320 A discloses technology for raising the heat dissipation ability by bonding to the bottom surface of a light conducting sheet (reflector) a heat sink through a heat conductive adhesive layer. However, in these technologies as well, there were the problem of an increase in the number of parts, the problem of the entry of outside air through the air holes and thereby the possibility of deposition of dust etc. at the inside device and deterioration of performance, the problem that sufficient heat conduction could not be obtained by the method of adhesion of a heat sink, and so forth.

JP 11-50040 A discloses technology for improving the heat dissipation ability of a resin by introducing particulate radiant materials. However, this technology did not consider application as a reflector and had the problem that compatibility with reflectance was not resolved.

DISCLOSURE OF THE INVENTION

In this way, in a lighting device, AV device, mobile device, plasma display, liquid crystal television, or other electrical/electronic device, to make the light brighter than the current levels or give a brightness equal to the current levels even with a smaller power consumption, it is essential to improve the heat absorption ability of the reflector itself without sacrificing the reflectance so as to enable the excess heat to be discharged outside the device and the temperature in the device to be suitable maintained.

The present invention tries to solve this problem by providing a visible light reflector superior in heat absorption ability.

The present invention provides a visible light reflector superior in heat absorption ability completed by intensive study of the inventors. In one aspect, it has as its gist the following:

(1) A visible light reflector superior in heat absorption ability characterized by comprising a metal sheet or a plated metal sheet having thereon a white resin sheet and having an area ratio of air bubbles present at the interface between the white resin sheet and the metal sheet or plated metal sheet of not more than 5%.

(2) A visible light reflector as set forth in the above (1) characterized by having between the metal sheet or plated metal sheet and the white resin sheet a coated white resin film having a diffuse reflectance of visible light at 555 nm of at least 0.70.

(3) A visible light reflector as set forth in the above (1) or (2) characterized in that the metal sheet or the plated metal sheet has a coated resin film at the other surface where the white resin sheet is not present.

(4) An electrical/electronic device incorporating a visible light reflector as set forth in any one of the above (1) to (3).

In a second aspect, the present invention has as its gist the following:

(a) A visible light reflector superior in heat absorption ability characterized by comprising a metal sheet or a plated metal sheet having at one surface a white resin sheet having a diffuse reflectance of visible light at 555 nm of its surface of at least 0.70 and having an total infrared emissivity in the region of the wavelength of 600 to 3000 cm$^{-1}$ measured at a predetermined temperature of 80°C to 200°C of at least 0.60.

(b) A visible light reflector as set forth in the above (a) characterized by having between the metal sheet or plated metal sheet and the white resin sheet a coated white resin film having a diffuse reflectance of visible light at 555 nm of at least 0.70.

(c) A visible light reflector as set forth in the above (a) or (b) characterized in that the metal sheet or the plated metal sheet has a coated resin film at the other surface where the white resin sheet is not present.

(d) An electrical/electronic device incorporating a visible light reflector as set forth in any one of the above (a) to (c).

According to the present invention, it becomes possible to provide technology making the light from a lighting device or an electrical/electronic device emitting optical signals brighter. Further, according to the present invention, it becomes possible to not only improve the performance of these devices, but also secure the same performance as in the past with a smaller energy consumption than the past and therefore provide an energy saving device. Consequently, the present invention is an invention with extremely high value in industry.

## BRIEF DESCRIPTION OF THE DRAWINGS

FIG. 1 is a schematic view illustrating one configuration of a visible light reflector of the present invention.
FIG. 2 is a schematic view illustrating another configuration of a visible light reflector of the present invention.
FIG. 3 is a schematic view illustrating further configuration of a visible light reflector of the present invention.
FIG. 4 is a schematic view for explaining an apparatus for measuring illuminance.

BEST MODE FOR CARRYING OUT THE INVENTION

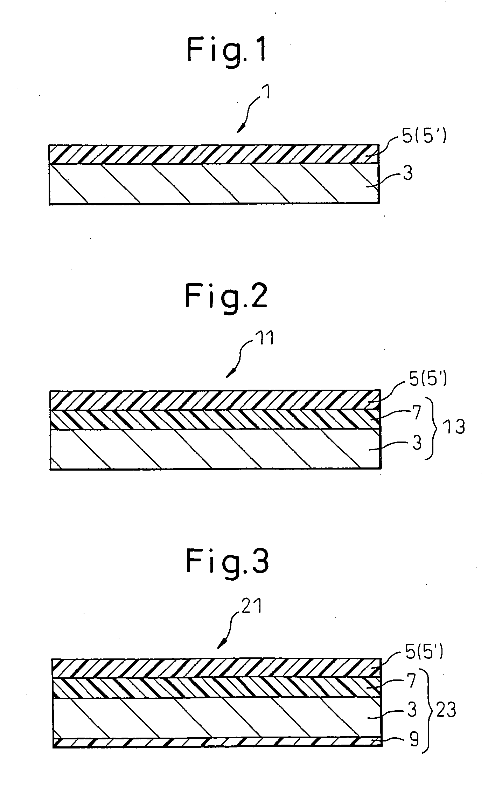

In a first aspect of the invention, the visible light reflector of the present invention has a resin sheet superposed on a metal sheet or a plated metal sheet (hereinafter the "metal sheet or plated metal sheet" being simply referred to as the "metal sheet" in some cases) to form a reflector and reduces the area ratio of the air bubbles present at the interface of the two to not more than 5% so as to eliminate the effect of air with its low heat conductivity and improve the heat absorption ability of the reflector. FIG. 1 shows the configuration of the visible light reflector 1 of the present invention. This reflector 1 has a white resin sheet 5 superposed on the metal sheet 3. Due to this, the heat absorption ability of the reflector is improved and the diffuse reflectance is improved. As shown in FIG. 2, if superposing a white resin sheet 5 on a coated white resin film 7 covering one surface of the metal sheet 3 to form the visible light reflector 11, the diffuse reflectance of the reflector 11 is further improved. Further, as shown in FIG. 3, if the reflector 21 has a covering of a coated resin film 9 on the other surface of the metal sheet 3 where the white resin sheet 5 is not superposed, the heat absorption ability of the reflector is further improved.

In the visible light reflector of the present invention, as the white resin sheet superposed on the metal sheet, a generally known resin sheet such as a resin sheet made of a polyethylene terephthalate (PET), polyester, polypropylene, vinyl chloride resin, fluoroplastic, acrylic resin, polyethylene, or other various resins may be used. These resin sheets may be colored by generally known white pigments such as titanium oxide, barium sulfate, calcium carbonate, etc. or may be whitened by generally known techniques such as introduction of a large number of fine air bubbles. Commercially available white resin sheets may also be used. If the surfaces of these white resin sheets have diffuse reflectances of the visible light at 555 nm of at least 70%, the reflection ability of the reflectors is further improved, so this is more preferable. If the diffuse reflectance is less than 70%, the reflection ability of the reflectors will sometimes become insufficient depending on the application. The diffuse reflectance of a white resin sheet may be adjusted by changing the type of the pigment in the resin, the concentration of the pigment or air bubbles, the thickness of the resin sheet, etc.

The method of superposing the white resin sheet on the metal sheet is not particularly limited so long as the method enables superposition so that the area ratio of air bubbles present at the interface of the resin sheet and metal sheet becomes not more than 5%. For example, JP 10-244626 A discloses technology for hot bonding the resin sheet at a temperature of at least the melt start temperature of the resin sheet and less than the heat absorption peak temperature at the melting, then raising the temperature to at least the heat absorption peak temperature of the resin sheet and pressing so as to enable reduction of the entrainment of air bubbles at the time of superposition. Further, JP 8-174670 A discloses technology for suppressing entrainment of air bubbles by superposing a resin sheet on a metal strip by a press roll while spraying a gas along a clearance of the press start part between the resin sheet and metal strip in the width direction of the metal strip from one width end of the metal strip to the other width end at a flow velocity of 10 m/sec to 300 m/sec. The air bubbles present at the interface between the resin sheet and the metal sheet may be measured and detected by ultrasonic microscope photography, as shown in the later explained test methods. This utilizes the principle that if there is air present at the interface, reflection of ultrasonic waves occurs. In the photograph obtained by ultrasonic microscope photography, there are ultrasonic wave reflecting parts and non-ultrasonic wave reflecting parts, so this is image processed to find the area of the ultrasonic wave reflecting parts per total area of the reflector so as to thereby find the area ratio of the air bubbles (%). The white resin sheet may be placed or adhered to the metal sheet after working the sheet or may be adhered to the metal sheet in advance before working, then the sheet worked.

The embodiments of the visible light reflector of the present invention, as explained below, include ones where a coated white resin film is present between the white resin sheet and the metal sheet. In the case of such an embodiment of a reflector, the metal sheet provided with the coated white resin film on its surface is deemed as a single metal sheet (coated metal sheet having white resin film coated on its surface) and the area ratio of air bubbles at the interface is defined as the area ratio of the air bubbles at the interface between the white resin sheet and the coated white resin film under it.

The thickness of the white resin sheet is not particularly limited, but preferably is 1 to 500 $\mu$m. If less than 1 $\mu$m, a sufficient diffuse reflectance is not obtained, while if over 500 $\mu$m, the effect becomes saturated and the result is not economical. A thickness of 20 to 200 $\mu$m is more preferable.

FIGS. 1 to 3 also show a visible light reflector according to a second aspect of the present invention.

In the visible light reflector 1 of the second aspect of the invention shown in FIG. 1, comprising a metal sheet or a plated metal sheet 3 on which a white resin sheet 5' is superposed, the diffuse reflectance of the visible light at 555 nm of the surface of the white resin sheet 5' is at least 0.70 and the total infrared emissivity at the region of the wave number of 600 to 3000 cm$^{-1}$ measured at a predetermined temperature from 80°C to 200°C is at least 0.60. Due to this, both of the diffuse reflectance and the heat absorption ability of the reflector are improved.

Further, as shown in FIG. 2, if covering the metal sheet or the plated metal sheet 3 on one surface with a coated white resin film 7 and placing thereon a white resin sheet 5', the diffuse reflectance of the reflector 11 is further improved. Further, as shown in FIG. 3, if the reflector 21 has a coated resin film 9 on the other surface of the metal sheet 3 where the white resin sheet 5' is not superposed, the heat absorption ability of the reflector is further improved.

In the visible light reflector of the second aspect of the invention, the white resin sheet superposed on the metal sheet used may be, so long as having a diffuse reflectance of visible light at 555 nm of its surface of at least 0.70 and having an total infrared emissivity in the region of the wavelength of 600 to 3000 cm$^{-1}$ measured at a predetermined temperature of 80°C to 200°C of at least 0.60, a generally known resin sheet, for example, a resin sheet made of a polyethylene terephthalate (PET), polyester, polypropylene, vinyl chloride resin, fluoroplastic, acrylic resin, polyethylene, or other various types of resins. Here, the reason for making the measurement temperature of the total infrared reflectance at least 80°C is that the higher the temperature, the greater the absolute amount of the infrared rays, while if at least 80°C, reliable measurement results may be obtained. Further, the reason for making it not more than 200°C is that if over this temperature, the resin sheet is liable to degrade due to the high temperature. The reason for making the measurement region 600 to 3000 cm$^{-1}$ is that this region represents the region from the near infrared to the far infrared. The resin sheet may be made white by a generally known technique such as coloration by a generally known white pigment such as titanium oxide, barium sulfate, calcium carbonate, etc. or mixing in a large amount of fine air bubbles. It is also possible to use a commercially available white resin sheet.

The diffuse reflectance of the white resin sheet may be adjusted by changing the type of pigment in the resin, the concentration of the pigment or air bubbles, the thickness of the resin sheet, etc.

The total infrared emissivity of the white resin sheet may be adjusted by using a generally known heat absorbing dye or pigment, for example, aniline black, a polymethylene dye, a tris-azo dye amine salt, a cyanine dye or a metal complex thereof, an anthraquinone-based pigment, a phthalocyanine-based pigment, iron oxide, carbon, etc. Among these generally known heat absorbing dyes or pigments, carbon emits infrared rays in a broad wave number region, so is more preferred. For example, as the carbon, carbon black, charcoal, graphite, or other generally known types may be used. For example, when using fine particle carbon, if the amount added is less than 0.5 wt%, the effect of covering the metal sheet will be inferior and the heat absorption ability will be insufficient, so this is not preferable, while if 1.0 wt% or more, the diffuse reflectance will drop in some cases, so this again is not preferable.

The white resin sheet may be superposed on the metal sheet by using a generally known method. The white resin sheet may be simply placed on the metal sheet or plated metal sheet or may be adhered so as not to shift off from the metal sheet. As generally known methods, the method of applying an adhesive or tackifier on the surface of the metal sheet or plated metal sheet or on the white resin sheet and then adhering them, the method of heat fusing or hot pressing the white resin sheet to the metal sheet or plated metal sheet, the method of using clips or screws, the method of mechanical bonding by folding back the metal sheet, etc. may be mentioned. Further, as the means for adhesion, hand adhesion, roll adhesion, press adhesion, or adhesion by another generally known means may be used. The white resin sheet may be superposed or adhered after the metal sheet or plated metal sheet is worked or may be adhered to the metal sheet or plated metal sheet in advance before working, then the sheet worked.

The thickness of the white resin sheet is not particularly limited, but preferably is 1 to 500 $\mu$m. If less than 1 $\mu$m, a sufficient diffuse reflectance is not obtained, while if over 500 $\mu$m, the effect becomes saturated and the result is not economical. A more preferable resin sheet thickness is 20 to 200 $\mu$m.

As the metal sheet used for the reflectors of both of the first and second aspects of the invention, a generally known metal sheet may be used. For example, steel sheet, aluminum sheet, titanium sheet, copper sheet, etc. may be mentioned. A plated metal sheet is also possible. As the type of plating, zinc plating, aluminum plating, copper plating, nickel plating, etc. may be mentioned. In addition, alloy plating is also possible. In the case of steel sheet, a cold rolled steel sheet, hot rolled steel sheet, hot-dipped galvanized steel sheet, electrogalvanized steel sheet, hot-dipped alloy zinc plated steel sheet, aluminum plated steel sheet, aluminum-zinc alloy plated steel sheet, stainless steel sheet, or other generally known steel sheet and plated steel sheet may be used. It is also possible to use precoated metal sheet. In this case, if the metal base material of the precoated metal sheet is steel sheet or plated steel sheet, the workability is improved, so this is more preferred.

The metal sheet may be rinsed with hot water, degreased by alkaline, pickled, or otherwise normally treated before the white resin sheet is superposed. Further, zinc phosphate treatment, chromate treatment, chromate-free chemical treatment, or other generally known chemical treatment aimed at imparting rust-prevention or coating adhesion may be applied. As the chromate-free treatment, the known technology described in JP 9-241576 A, JP 10-251509 A, JP 10-337530 A, JP 2000-17466 A, JP 2000-248385 A, JP 2000-273659 A, JP 2000-282252 A, JP 2000-265282 A, JP 2000-167482 A, JP 2001-89868 A, JP 2001-316845 A, JP 2002-60959 A, JP 2002-266081 A, JP 2002-38280 A, JP 2003-253464 A, etc. or the chromate-free treatment agent "CT-E300N" made by Nihon Parkerizing Co., Ltd. or other commercially available treatment agents may be used.

If the metal sheet used for the reflector of the present invention has superposed on one surface a coated white resin film having a diffuse reflectance of visible light at 555 nm of at least 0.70 and has thereon a white resin sheet superposed, the visible light reflectance of the reflector will be improved, so this is more preferable.

The coated white resin film applied to the metal sheet of the present invention may be a generally known coated white resin film such as a polyester resin-based coating, a melamine resin-based coating, an acrylic resin-based coating, a urethane-based coating, an epoxy-based coating, a fluororesin-based coating, a vinyl chloride resin-based coating, or other coating colored white. A commercially available one may also be used.

Among these generally known coatings, a coating superior in workability for precoated metal sheet is particularly preferable. As the coating for precoated metal sheet, a polyester-based coating or a fluororesin-based coating of a type using melamine or isocyanate as the curing agent is preferable since it is superior in workability. The molecular weight of the polyester resin or fluororesin etc. used for the coating for such precoated metal sheet is preferably 2000 to 50000 in terms of number average molecular weight. If the number average molecular weight is less than 2000, cracks and peeling easily occur in the coated film at the time of working and the workability of the coated film sometimes deteriorates. If over 50000, dissolution in an organic solvent etc. is difficult and sometimes formation of a coating for application to a metal sheet is difficult. The number average molecular weight is more preferably 10000 to 30000. Further, the glass transition point of the resin used for the coating for the precoated metal sheet is preferably not more than 100°C. If the glass transition point is over 100°C, the workability of the coated film formed will sometimes become inferior. The glass transition point is more preferably 0 to 50°C. If the glass transition point is too low, the coated film formed will be too soft, so scratches or pressure marks or other such coating defects will sometimes occur.

In the coated white resin film in the reflector of the present invention, a generally known white pigment such as titanium oxide, barium sulfate, zinc white, calcium carbonate, etc. may be used. Among these white pigments, titanium oxide is extremely high in refractive index, so the diffuse reflectance of the visible light by the coated film is further improved and the visible light reflection ability of the reflector becomes higher. Therefore, this is more preferable. The amount of the white pigment added may be freely selected in accordance with need, but 30 to 60 wt% with respect to the solid content of the coated film is more preferable. If less than 30 wt% or more than 60 wt%, no improvement in the visible light diffuse reflectance of the coated film can be hoped for. More preferably, the amount is 45 wt% to 55 wt%. The thickness of the coated white resin film may also be freely selected in accordance with need, but 5 to 50 $\mu$m as dried thickness is preferable. If less than 5 $\mu$m, no improvement in the visible light diffuse reflectance of the coated film can be hoped for, while if over 50 $\mu$m, the effect ends up becoming saturated and the result is uneconomical. The more preferable thickness is 10 to 40 $\mu$m.

The diffuse reflectance of the white coated white resin film, as explained above, may be adjusted by changing the type of the pigment in the coated film, the pigment concentration, or the film thickness. Further, in accordance with need, it is also possible to form a coated primer film designed to prevent rust or impart coating adhesion under the coated white resin film.

The coated white resin film used for the reflector of the present invention may be obtained by a generally known coating method such as using brush coating, spray coating, roll coater coating, curtain flow coater coating, die coater coating, roller curtain coater coating, powder coating, electrodeposition coating, etc. to form a coated film and then drying and baking this. The method of drying and baking the coated film may also be a generally known method such as hot air oven baking, direct-fired type oven baking, induction furnace baking, far infrared oven baking, UV irradiation, electron beam irradiation, etc. Among these coating and baking methods, if coating and baking is carried out by a coil coating line or a sheet coating line using as the coating method roll coater coating, curtain flow coater coating, die coater coating, roller curtain coater coating or the like and using as the baking oven a hot air oven, direct-fired type oven, induction furnace, far infrared oven or the like, the work efficiency is further improved, so this is more preferable.

The reflector of the present invention more preferably has the other surface of the metal sheet where the white resin sheet is not provided covered by a coated resin film since the reflected visible light would become even brighter. The inventors believe that the reason is that the surface of this coated resin film (to differentiate this from the coated white resin film of the opposite surface of the metal sheet, in the following explanation, this will be referred to as the "back surface resin-coated film") has a higher infrared emission rate or infrared absorption rate than the metal surface, so the heat (infrared rays) produced from the light source of the lighting device or the device emitting the optical signal is dissipated from the back surface resin-coated film and the ambient temperature of the light source falls, so the visible light reflected by the reflector becomes brighter.

The back surface resin-coated film used may be a generally known resin such as a polyester resin, melamine resin, acrylic resin, urethane resin, epoxy resin, fluororesin, vinyl chloride resin, etc. A commercially available one may also be used. Among these generally known coated resin films, a film superior in workability for use for precoated metal sheet would be more preferable. As the coated film for precoated metal sheet, a polyester resin or fluororesin of a type using melamine or isocyanate as a curing agent is more preferable since it is superior in workability. The molecular weight of the polyester resin or fluororesin etc. used for the coated film for such precoated metal sheet is preferably 2000 to 50000 in terms of number average molecular weight. If the number average molecular weight is less than 2000, cracks and peeling will easily occur in the coated film at the time of working and the workability of the coated film will sometimes deteriorate. If over 50000, dissolution in an organic solvent etc. is difficult and sometimes formation of a coating for application to a metal sheet would be difficult. The number average molecular weight is more preferably 10000 to 30000. Further, the glass transition point of the resin used for the coating for the precoated metal sheet is preferably not more than 100°C. If the glass transition point is over 100°C, the workability of the coated film formed will sometimes become inferior. The glass transition point is more preferably 0 to 50°C. If the glass transition point is too low, the coated film formed will be too soft, so scratches or pressure marks or other such coating defects will sometimes occur. Further, the thickness is not particularly defined and may be adjusted in accordance with need, but 1 to 50 $\mu$m is preferable. If less than 1 $\mu$m, the desired heat absorption effect is not obtained, while if over 50 $\mu$m, the effect ends up becoming saturated, so the result is uneconomical.

The back surface resin-coated film may have a substance such as a pigment with a high infrared emission and absorption ability added to it. As a substance having a high infrared emission and absorption ability, carbon black, charcoal, graphite, aniline black, a polymethylene dye, a tris-azo dye amine salt, a cyanine dye or a metal complex thereof, an anthraquinorie-based substance, phthalocyanine-based substance, iron oxide, ferrosilicon, or other general known one may be mentioned.

The back surface resin-coated film can be obtained by forming a coated film and drying and baking it by the same method as the method of applying the coated white resin film of the opposite surface.

An embodiment of the reflector 21 provided with the back surface resin-coated film is shown in FIG. 3. In this embodiment of the reflector, one surface of the metal sheet 3 is provided with the coated white resin film 7, the opposite surface is provided with the back surface resin-coated film 9, and the coated white resin film 7 of the resultant coated metal sheet 23 has a white resin sheet 5 present thereon. In this embodiment, the coated white resin film 7 may be omitted in certain cases.

The electrical/electronic device incorporating the reflector of the present invention becomes brighter in lighting and optical signals and enables the control board and other electronic circuits provided inside to be operated efficiently and stably. Note that as the electrical/electronic devices, lighting devices, AV devices, mobile devices, plasma displays, liquid crystal televisions, etc. may be mentioned.

EXAMPLES

Next, examples will be used to further explain the present invention, but the present invention is not limited to these examples.

Example 1

The Coating 1 to Coating 4 shown next were prepared.

Coating 1
A commercially available organic solvent soluble amorphous polyester resin (hereinafter referred to as the "polyester resin") "Vylon (TM) GK140" made by Toyobo (number average molecular weight: 13000, Tg: 20°C) was dissolved in an organic solvent (mixed solvent of Solvesso 150 and cyclohexanone in weight ratio of 1:1). To the obtained solution, 15 parts by weight (converted to solid content) of the commercially available hexamethoxymethylated melamine "Cymel (trademark) 303" made by Mitsui Cytec was added with respect to 100 parts by weight of the polyester resin (converted to solid content). Further, 0.5 part by weight (converted to solid content) of the commercially available acidic catalyst "Catalyst 6003B" made by Mitsui Cytec was added. The result was stirred to obtain a melamine curing type polyester-based clear coating. Further, titanium oxide "Tipaque (trademark) CR95" made by Ishihara Sangyo Kaisha was added to the prepared clear coating in an amount of 50 wt% (converted to solid content). The result was stirred to obtain the Coating 1.
Here, reference is made to "parts by weight" to express the ratio of the added matter (in units of parts) when designating the state before addition of the added matter as 100 parts, while reference is made to "wt%" to express the rate (%) of the added matter when designating the state after addition of the added matter as 100%.
Coating 2
A clear coating was prepared by a method similar to the Coating 1. Titanium oxide "Tipaque CR95" made by Ishihara Sangyo Kaisha was added to this in an amount of 35 wt% (converted to solid content) and stirred to obtain the Coating 2.
Coating 3
The precoated steel sheet coating "FL100HQ" made by Japan Fine Coatings, Inc. of a gray color was used.
Coating 4
To a polyester-based primer coating FLC641 clear coating made by Japan Fine Coatings, Inc., a chromate-free anti-corrosion pigment "Shieldex C303" made by Grace in an amount of 6 parts by weight (converted to solid content) with respect to 100 parts by weight of resin solid content and titanium oxide "Tipaque CR95" made by Ishihara Sangyo Kaisha in an amount of 26 parts by weight (converted to solid content) were added and stirred to obtain a primer coating.

A reflector was prepared by the method shown below.
A metal sheet of a thickness of 0.6 mm was degreased by alkaline in a 60°C aqueous solution of the commercially available alkali degreasing agent "FC4336" made by Nihon Parkerizing Co., Ltd. diluted to a concentration of 2 wt%, rinsed with water, and then dried.
The metal sheets used were as follows:

EG: Commercially available electrogalvanized steel sheet (zinc deposition amount: 20 g/m$^2$ per surface, material: SECE (JIS G 3313))
Al: Commercially available aluminum sheet (material: 1100 (JIS H 4000))

The white resin sheets were prepared as follows. Note that the thickness of the attached resin sheet was 200 μm in each case.

(1) White Sheet PP-1
To the commercially available polypropylene resin "IDEMITSU PPF-734NP" made by Idemitsu Petrochemical, the titanium oxide "Tipaque CR95" made by Ishihara Sangyo Kaisha was added in an amount of 30 wt%. The mixture was uniformly mixed and sufficiently vacuum dried. The result was fed to an extruder provided with a T-die for forming a sheet and melt extruded at a temperature at which the resin would melt to a temperature at which the resin would break down. The result was led to a chill roll and takeup roll to obtain the white sheet PP-1.
(2) White Sheet PP-2
To the polypropylene resin "IDEMITSU PPF-734NP" made by Idemitsu Petrochemical, the titanium oxide "Tipaque CR95" made by Ishihara Sangyo Kaisha was added in an amount of 15 wt%. The mixture was uniformly mixed and sufficiently vacuum dried. The result was fed to an extruder provided with a T-die for forming a sheet and melt extruded at a temperature at which the resin would melt to a temperature at which the resin would break down. The result was led to a chill roll and takeup roll to obtain the white sheet PP-2.

A heat analysis was conducted of the resin sheets used for the tests in advance by a differential scanning calorimeter (DSC), whereupon both of the white sheet PP-1 and white sheet PP-2 had a melt start temperature of 210°C and a heat absorption peak temperature at the time of melting at 260°C.

Based on the characteristic temperatures of the resins, each of the resins was hot bonded to metal sheet at 210°C by a silicone rubber lined hot bonding roll. After this, a temperature raising device was used to raise the temperature to 265°C, then a silicone rubber lined pressing roll was used to press the result by a surface pressure of 500 kgf/cm$^2$ (49 MPa) to prepare a reflector. Further, as comparative examples, reflectors were prepared by the conventional method of superposition using the above metal sheets and resin sheets, that is, the method of superposition at at least the heat absorption peak temperature in melting the resin.

The reflectors comprising the white coated precoated metal sheets and the white resin sheets attached to one sides thereof were prepared by the following procedure.

A 0.6 mm thick metal sheet (above-mentioned electrogalvanized steel sheet EG or aluminum sheet Al) was degreased by alkaline in a 60°C aqueous solution of the commercially available alkali degreasing agent "FC4336" made by Nihon Parkerizing Co., Ltd. diluted to a concentration of 2 wt%, rinsed with water, and then dried. Next, a commercially available chromate-free chemical treatment agent "CT-E300" made by Nihon Parkerizing Co., Ltd. was coated on the two surfaces of the metal sheet by a roll coater and dried under conditions of a peak metal temperature of 60°C. Note that the amount of deposition was made 150 mg/m$^2$ in terms of the total solid content of the coated film. Subsequently, the one surface of the chemically treated metal sheet was coated with a primer coating of the Coating 4 to a dried thickness of 10 $\mu$m, while the other surface (hereinafter referred to as the "back surface") was coated with the Coating 3 to a dried thickness of 5 $\mu$m, by a roll coater in both cases, and the coatings were dried to cure by an induction furnace using hot air. The drying and curing were carried out under the conditions where the peak metal temperature (PMT) was 210°C. The surface given the primer coating was coated with the Coating 1 or the Coating 2 by a roll coater and dried to cure the coating by an induction furnace using hot air. The drying and curing were carried out under the conditions where the peak metal temperature (PMT) was 230°C.

Next, the above-mentioned white resin sheet PP-1 or PP-2 was attached to a prepared precoated metal sheet to prepare a reflector by hot bonding. As comparative examples, reflectors comprising precoated metal sheets with no resin sheets attached were prepared.

Details of the prepared reflectors are shown in Table 1.

Table 1 (part 1)

| Reflector no. | Details of metal sheet | | | | | Details of white resin sheet | | | | Diffuse reflectance of reflector |
|---|---|---|---|---|---|---|---|---|---|---|
| | Type of base sheet | Existence of coated primer film | Existence of back surface coated film | Type of white coating | Diffuse reflectance of coated white surface | Type of sheet | Temperature rise and pressing | Diffuse reflectance of sheet surface | Area ratio of air bubbles (%) | |
| 1 | EG | No | No | No | - | PP-1 | Yes | 0.71 | 4.8 | 0.70 |
| 2 | EG | No | No | No | - | PP-1 | No | 0.71 | 12.0 | 0.69 |
| 3 | EG | No | No | No | - | PP-2 | Yes | 0.60 | 5.0 | 0.61 |
| 4 | EG | No | No | No | - | PP-2 | No | 0.60 | 11.7 | 0.61 |
| 5 | Al | No | No | No | - | PP-1 | Yes | 0.71 | 4.9 | 0.72 |
| 6 | Al | No | No | No | - | PP-1 | No | 0.71 | 12.2 | 0.70 |
| 7 | Al | No | No | No | - | PP-2 | Yes | 0.60 | 4.9 | 0.60 |
| 8 | Al | No | No | No | - | PP-2 | No | 0.60 | 12.1 | 0.61 |
| 9 | EG | Yes | Yes | Coating 1 | 0.72 | PP-1 | Yes | 0.71 | 4.5 | 0.75 |
| 10 | EG | Yes | Yes | Coating 1 | 0.72 | PP-1 | No | 0.71 | 10.9 | 0.76 |
| 11 | EG | Yes | Yes | Coating 1 | 0.72 | PP-2 | Yes | 0.60 | 4.9 | 0.67 |
| 12 | EG | Yes | Yes | Coating 1 | 0.72 | PP-2 | No | 0.60 | 11.2 | 0.66 |
| 13 | Al | Yes | Yes | Coating 1 | 0.72 | PP-1 | Yes | 0.71 | 3.9 | 0.76 |
| 14 | Al | Yes | Yes | Coating 1 | 0.72 | PP-1 | No | 0.71 | 12.1 | 0.76 |
| 15 | Al | Yes | Yes | Coating 1 | 0.72 | PP-2 | Yes | 0.60 | 3.6 | 0.65 |
| 16 | Al | Yes | Yes | Coating 1 | 0.72 | PP-2 | No | 0.60 | 11.6 | 0.66 |
| 17 | EG | Yes | Yes | Coating 2 | 0.66 | PP-1 | Yes | 0.71 | 4.5 | 0.69 |
| 18 | EG | Yes | Yes | Coating 2 | 0.66 | PP-1 | No | 0.71 | 10.9 | 0.70 |
| 19 | EG | Yes | Yes | Coating 2 | 0.66 | PP-2 | Yes | 0.60 | 4.9 | 0.60 |
| 20 | EG | Yes | Yes | Coating 2 | 0.66 | PP-2 | No | 0.60 | 11.2 | 0.58 |
| 21 | Al | Yes | Yes | Coating 2 | 0.67 | PP-1 | Yes | 0.71 | 3.9 | 0.71 |

EP 1 742 088 A1

| Reflector no. | Details of metal sheet | | | | | Details of white resin sheet | | | | Diffuse reflectance of reflector |
|---|---|---|---|---|---|---|---|---|---|---|
| | Type of base sheet | Existence of coated primer film | Existence of back surface coated film | Type of white coating | Diffuse reflectance of coated white surface | Type of sheet | Temperature rise and pressing | Diffuse reflectance of sheet surface | Area ratio of air bubbles (%) | |
| 22 | Al | Yes | Yes | Coating 2 | 0.67 | PP-1 | No | 0.71 | 12.1 | 0.69 |
| 23 | Al | Yes | Yes | Coating 2 | 0.67 | PP-2 | Yes | 0.60 | 3.6 | 0.61 |
| 24 | Al | Yes | Yes | Coating 2 | 0.67 | PP-2 | No | 0.60 | 11.6 | 0.59 |
| 25 | EG | No | Yes | Coating 1 | 0.70 | PP-1 | Yes | 0.71 | 4.6 | 0.72 |
| 26 | EG | No | Yes | Coating 1 | 0.70 | PP-2 | Yes | 0.60 | 4.6 | 0.72 |
| 27 | EG | Yes | No | Coating 1 | 0.72 | PP-1 | Yes | 0.71 | 4.9 | 0.73 |
| 28 | EG | Yes | No | Coating 1 | 0.72 | PP-2 | Yes | 0.60 | 4.9 | 0.73 |
| 29 | EG | No | No | Coating 1 | 0.70 | PP-1 | Yes | 0.71 | 4.9 | 0.72 |
| 30 | EG | No | No | Coating 1 | 0.70 | PP-2 | Yes | 0.71 | 4.9 | 0.72 |
| 31 | EG | Yes | Yes | Coating 1 | 0.71 | - | - | - | - | 0.71 |
| 32 | EG | Yes | Yes | Coating 2 | 0.65 | - | - | - | - | 0.65 |

EP 1 742 088 A1

Each of the prepared reflectors was evaluated and tested as follows:

1) Measurement of Diffuse Reflectances of Visible Light of Precoated Metal Sheet White Surface and White Resin Sheet

A spectrophotometer "UV265" made by Shimadzu Corporation was fit with an integrating sphere reflection attachment. The diffuse reflectances of the visible light at 555 nm of the white surface of the precoated metal sheet and the white resin sheet before adhesion were measured. The results of measurement are shown in FIG. 1.

2) Measurement of Area Ratio of Air Bubbles

An ultrasonic microscope "ACOUSTIC MICROSCOPE UH3" made by Olympus was used to photograph the state of formation of air bubbles at the white resin sheet-metal sheet interface by a lens unit of 200 NHz, an attenuation of 15 dB, and a photographing power of 120X and an image analysis processing system was used to determine the area ratio of the air bubbles. Note that the measurement was performed at any five points of the reflector and the average found. The results of the measurement are shown in Table 1.

3) Measurement of Illuminance of Lighting Device

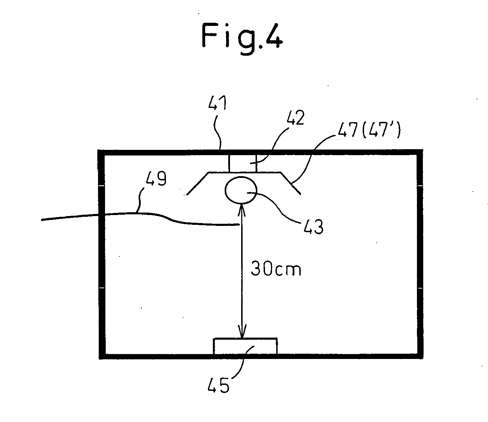

FIG. 4 schematically shows the experimental system. A wood box 41 was fit inside it with a commercially available fluorescent lighting device 42. At a location 30 cm away from a fluorescent tube 43, a commercially available illuminometer sensor 45 was arranged. The fluorescent tube 43 used in the experiment was a Type 16, 16W output fluorescent tube. At the time of measurement, a reflector 47 attached to the fluorescent lighting device (hereinafter referred to as an "existing reflector") was detached. Each reflector shown in Table 1 was used to prepare a measurement reflector 47' of the same shape as the existing reflector. The illuminances when attaching the existing reflector 47 and when attaching the thus prepared measurement reflectors 47' were measured and evaluated as follows:

Case of rate of change in illuminance of at least 110%: A
Case of rate of change in illuminance of 103% to less than 110%: B
Case of rate of change in illuminance of less than 103%: C
Note that the rate of change in illuminance was defined as follows:

$$\text{Rate of change in illuminance (\%)} = (\text{[illuminance at prepared measurement reflector]}/\text{[illuminance at existing reflector]}) \times 100$$

The obtained results are shown in Table 2.

4) Bending Test of Reflector

A prepared reflector was bent 90 degrees in a 20°C atmosphere with the surface with the adhered white resin sheet at the outside. The state of damage and the state of peeling of the resin sheet at the worked part were visually observed and the workability evaluated by the following criteria. The reflector was worked to 0 mm at the inside of the test piece (generally called 0 mm R bending).

Case of no damage to appearance at all: A
Case of resin sheet or coated film being partially damaged or peeled off: B
Case of resin sheet or coated film being severely damaged or peeled off: C

The obtained results are shown in Table 2.

5) Corrosion Resistance Test of Reflector

A prepared reflector was scored with cross cuts reaching the base metal at the surface where the white resin sheet was attached and was subjected to a salt water spraying test by the method described in JIS K 5400.9.1. The salt water was sprayed on the cross cut surface of the test piece. The test time was 72 hours. The width of swelling of the coated film from the cut parts on the front surface was measured. The corrosion resistance was evaluated using the criteria of the case of a swelling width of the cut parts of not more than 3 mm on one side as A and the case of a swelling width of the cut parts of over 3 mm on one side as C. The obtained results are shown in Table 2.

6) Measurement of Temperature of Vicinity of Lighting Device

As shown in FIG. 4, a thermocouple 49 was provided at a position 10 cm below the fluorescent tube 43. The temperature after 60 minutes after supplying power to the fluorescent tube 43 was measured. The obtained results are shown in Table 2.

Table 2

| Reflector no. | Rate of change of illuminance | Workability | Corrosion resistance | Temperature (°C) | Remarks |
|---|---|---|---|---|---|
| 1 | B | A | C | 44 | Inv. ex. |
| 2 | C | A | C | 49 | Comp. ex. |
| 3 | B | A | C | 43 | Inv. ex. |
| 4 | C | A | C | 48 | Comp. ex. |
| 5 | B | A | C | 44 | Inv. ex. |
| 6 | C | A | C | 49 | Comp. ex. |
| 7 | B | A | C | 43 | Inv. ex. |
| 8 | C | A | C | 48 | Comp. ex. |
| 9 | A | A | A | 39 | Inv. ex. |
| 10 | C | A | A | 44 | Comp. ex. |
| 11 | B | A | A | 40 | Inv. ex. |
| 12 | C | A | A | 43 | Comp. ex. |
| 13 | A | A | A | 39 | Inv. ex. |
| 14 | C | A | A | 44 | Comp. ex. |
| 15 | B | A | A | 40 | Inv. ex. |
| 16 | C | A | A . | 43 | Comp. ex. |
| 17 | B | A | A | 39 | Inv. ex. |
| 18 | C | A | A | 44 | Comp. ex. |
| 19 | B | A | A | 40 | Inv. ex. |
| 20 | C | A | A | 43 | Comp. ex. |
| 21 | B | A | A | 39 | Inv. ex. |
| 22 | C | A | A | 44 | Comp. ex. |
| 23 | B | A | A | 40 | Inv. ex. |
| 24 | C | A | A | 43 | Comp. ex. |
| 25 | A | A | B | 38 | Inv. ex. |
| 26 | B | A | B | 38 | Inv. ex. |
| 27 | B | A | A | 44 | Inv. ex. |
| 28 | B | A | A | 44 | Inv. ex. |
| 29 | B | A | B | 44 | Inv. ex. |
| 30 | B | A | B | 44 | Inv. ex. |
| 31 | C | A | A | 36 | Comp. ex. |
| 32 | C | A | A | 36 | Comp. ex. |

From Table 2, lighting devices using the reflectors of the present invention are lower in temperature in the vicinity of the light source and higher in rate of change of illuminance compared with lighting devices using conventional metal sheets having white resin sheets attached to them in a conventional way (where area ratio of air bubbles is not controlled and area ratio of air bubbles of over 5% is exhibited) as reflectors. Further, the reflectors of the present invention are higher in rate of change of illuminance compared with conventional reflectors comprising metal sheets just coated white, and are preferable.

Example 2

Coatings and metal sheets the same as those used in Example 1 were used to prepare reflectors.

The white resin sheets used in the example were prepared as follows. Note that the thicknesses of the resin sheets attached were all 200 $\mu$m.

(1) White Sheet PP-3

To the commercially available polypropylene resin "IDEMITSU PPF-734NP" made by Idemitsu Petrochemical, the titanium oxide "Tipaque (trademark) CR95" made by Ishihara Sangyo Kaisha was added in an amount of 29.5 wt%. Further, the carbon black "Tokablack #7350F" made by Tokai Carbon was added in an amount of 0.5 wt%. The mixture was uniformly mixed and sufficiently vacuum dried. The result was fed to an extruder provided with a T-die for forming a sheet and melt extruded at a temperature at which the resin would melt to a temperature at which the resin would break down. The result was led to a chill roll and takeup roll to obtain the white sheet PP-3.

(2) White Sheet PP-4

To the "IDEMITSU PPF-734NP" made by Idemitsu Petrochemical, the titanium oxide "Tipaque (trademark) CR95" made by Ishihara Sangyo Kaisha was added in an amount of 30 wt%. The mixture was uniformly mixed and sufficiently vacuum dried. The result was fed to an extruder provided with a T-die for forming a sheet and melt extruded at a temperature at which the resin would melt to a temperature at which the resin would break down. The result was led to a chill roll and takeup roll to obtain the white sheet PP-4.

(3) White Sheet PP-5

To "IDEMITSU PPF-734NP" made by Idemitsu Petrochemical, the titanium oxide "Tipaque (trademark) CR95" made by Ishihara Sangyo Kaisha was added in an amount of 27 wt%. Further, the carbon black "Tokablack #7350F" made by Tokai Carbon was added in an amount of 3 wt%. The mixture was uniformly mixed and sufficiently vacuum dried. The result was fed to an extruder provided with a T-die for forming a sheet and melt extruded at a temperature at which the resin would melt to a temperature at which the resin would break down. The result was led to a chill roll and takeup roll to obtain the white sheet PP-5.

Next, the attachment of the prepared white resin sheets was performed by hot bonding to prepare reflectors.

The reflectors comprising the white precoated metal sheets and the white resin sheets attached to one sides of the same were prepared by the procedure as explained in Example 1.

The above-mentioned white resin sheets PP-3 to PP-4 were attached to the prepared precoated metal sheets by hot bonding to prepare reflectors. As comparative examples, reflectors comprising precoated metal sheets with no resin sheets attached were prepared.

Details of the prepared reflectors are shown in Table 3.

Table 3 (part 1)

| Reflector no. | Details of metal sheet | | | | | Details of white resin sheet | | |
|---|---|---|---|---|---|---|---|---|
| | Type of base sheet | Existence of coated primer film | Existence of back surface coated film | Type of white coating | Diffuse reflectance of coated white surface | Type of sheet | Diffuse reflectance of sheet surface | Emissivity of sheet surface |
| 1 | EG | No | No | No | - | White PP-1 | 0.71 | 0.62 |
| 2 | EG | No | No | No | - | White PP-2 | 0.85 | 0.50 |
| 3 | EG | No | No | No | - | White PP-3 | 0.50 | 0.90 |
| 4 | Al | No | No | No | - | White PP-1 | 0.71 | 0.62 |
| 5 | Al | No | No | No | - | White PP-2 | 0.85 | 0.50 |
| 6 | Al | No | No | No | - | White PP-3 | 0.50 | 0.90 |

(continued)

| Reflector no. | Details of metal sheet | | | | | Details of white resin sheet | | |
|---|---|---|---|---|---|---|---|---|
| | Type of base sheet | Existence of coated primer film | Existence of back surface coated film | Type of white coating | Diffuse reflectance of coated white surface | Type of sheet | Diffuse reflectance of sheet surface | Emissivity of sheet surface |
| 7 | EG | Yes | Yes | Coating 1 | 0.73 | White PP-1 | 0.71 | 0.62 |
| 8 | EG | Yes | Yes | Coating 1 | 0.73 | White PP-2 | 0.85 | 0.50 |
| 9 | EG | Yes | Yes | Coating 1 | 0.73 | White PP-3 | 0.50 | 0.90 |
| 10 | Al | Yes | Yes | Coating 1 | 0.73 | White PP-1 | 0.71 | 0.62 |
| 11 | Al | Yes | Yes | Coating 1 | 0.73 | White PP-2 | 0.85 | 0.50 |
| 12 | Al | Yes | Yes | Coating 1 | 0.73 | White PP-3 | 0.50 | 0.90 |
| 13 | EG | Yes | Yes | Coating 2 | 0.62 | White PP-1 | 0.71 | 0.62 |
| 14 | EG | Yes | Yes | Coating 2 | 0.62 | White PP-2 | 0.85 | 0.50 |
| 15 | EG | Yes | Yes | Coating 2 | 0.62 | White PP-3 | 0.50 | 0.90 |
| 16 | Al | Yes | Yes | Coating 2 | 0.62 | White PP-1 | 0.71 | 0.62 |
| 17 | Al | Yes | Yes | Coating 2 | 0.62 | White PP-2 | 0.85 | 0.50 |
| 18 | Al | Yes | Yes | Coating 2 | 0.62 | White PP-3 | 0.50 | 0.90 |
| 19 | EG | No | Yes | Coating 1 | 0.70 | White PP-1 | 0.71 | 0.62 |
| 20 | EG | No | Yes | Coating 1 | 0.70 | White PP-2 | 0.85 | 0.50 |
| 21 | EG | No | Yes | Coating 1 | 0.70 | White PP-3 | 0.50 | 0.90 |
| 22 | EG | Yes | No | Coating 1 | 0.73 | White PP-1 | 0.71 | 0.62 |
| 23 | EG | Yes | No | Coating 1 | 0.73 | White PP-2 | 0.85 | 0.50 |
| 24 | EG | Yes | No | Coating 1 | 0.73 | White PP-3 | 0.50 | 0.90 |
| 25 | EG | No | No | Coating 1 | 0.70 | White PP-1 | 0.71 | 0.62 |
| 26 | EG | No | No | Coating 1 | 0.70 | White PP-2 | 0.85 | 0.50 |

(continued)

| Reflector no. | Details of metal sheet | | | | | Details of white resin sheet | | |
|---|---|---|---|---|---|---|---|---|
| | Type of base sheet | Existence of coated primer film | Existence of back surface coated film | Type of white coating | Diffuse reflectance of coated white surface | Type of sheet | Diffuse reflectance of sheet surface | Emissivity of sheet surface |
| 27 | EG | No | No | Coating 1 | 0.70 | White PP-3 | 0.50 | 0.90 |
| 28 | EG | Yes | Yes | Coating 1 | 0.70 | No | - | - |
| 29 | EG | Yes | Yes | Coating 2 | 0.62 | No | - | - |

The prepared reflectors were evaluated and tested as follows:

1) Measurement of Diffuse Reflectances of Visible Light of Precoated Metal Sheet White Surface and White Resin Sheet
The same method as in Example 1 was used. The results of measurement are shown in FIG. 3.
2) Measurement of Emissivity of Resin Sheet
The total emissivities of the metal sheets were measured by using a Fourier transform infrared spectrophotometer "Valor III" made by JASCO to measure the infrared light emitting spectra in the regions of the wave numbers of 600 to 30.00 cm$^{-1}$ when making the surface temperature of the resin sheets used 80°C and comparing the same with the light emitting spectrum of a standard black body. The standard black body used was an iron sheet spray coated with "THI-1B Black Body Spray" sold by Tacos Japan (made by Okitsumo) to a thickness of $30\pm2$ $\mu$m. The results of measurement are shown in Table 3.
3) Measurement of Illuminance of Lighting Device
The same method as in Example 1 was used. The obtained results are shown in Table 4.
4) Bending Test of Reflector
The same method as in Example 1 was used. The obtained results are shown in Table 4.
5) Corrosion Resistance Test of Reflector
The same method as in Example 1 was used. The obtained results are shown in Table 4.
6) Measurement of Temperature of Vicinity of Lighting Device
The same method as in Example 1 was used. The obtained results are shown in Table 4.

Table 4

| Reflector no. | Rate of change of illuminance | Workability | Corrosion resistance | Temperature (°C) | Remarks |
|---|---|---|---|---|---|
| 1 | B | A | B | 44 | Inv. ex. |
| 2 | C | A | B | 49 | Comp. ex. |
| 3 | C | A | B | 40 | |
| 4 | B | A | B | 44 | Inv. ex. |
| 5 | C | A | B | 49 | Comp. ex. |
| 6 | C | A | B | 40 | |
| 7 | A | A | A | 39 | Inv. ex. |
| 8 | C | A | A | 44 | Comp. ex. |
| 9 | C | A | A | 40 | |
| 10 | A | A | A | 39 | Inv. ex. |

(continued)

| Reflector no. | Rate of change of illuminance | Workability | Corrosion resistance | Temperature (°C) | Remarks |
|---|---|---|---|---|---|
| 11 | C | A | A | 44 | Comp. ex. |
| 12 | C | A | A | 40 | |
| 13 | B | A | a | 39 | Inv. ex. |
| 14 | C | A | A | 44 | Comp. ex. |
| 15 | C | A | A | 40 | |
| 16 | B | A | A | 39 | Inv. ex. |
| 17 | C | A | A | 44 | Comp. ex. |
| 18 | C | A | A | 40 | |
| 19 | A | A | B | 40 | Inv. ex. |
| 20 | B | A | B | 42 | Comp. ex. |
| 21 | B | A | B | 38 | |
| 22 | B | A | A | 44 | Inv. ex. |
| 23 | C | A | A | 47 | Comp. ex. |
| 24 | C | A | A | 42 | |
| 25 | B | A | B | 44 | Inv. ex. |
| 26 | C | A | B | 47 | Comp. ex. |
| 27 | C | A | B | 42 | |
| 28 | C | A | A | 36 | |
| 29 | C | A | A | 46 | |

From Table 4, lighting devices using the reflectors of the present invention are higher in rate of change of illuminance compared with lighting devices using conventional metal sheets with white resin sheets attached to them or conventional white coated metal sheets as reflectors, and are preferable.

**Claims**

1.  A visible light reflector superior in heat absorption ability **characterized by** comprising a metal sheet or a plated metal sheet having thereon a white resin sheet and having an area ratio of air bubbles present at the interface between said white resin sheet and said metal sheet or plated metal sheet of not more than 5%.

2.  A visible light reflector as set forth in claim 1, **characterized by** having between said metal sheet or plated metal sheet and said white resin sheet a coated white resin film having a diffuse reflectance of visible light at 555 nm of at least 0.70.

3.  A visible light reflector as set forth in claim 1 or 2, **characterized in that** said metal sheet or said plated metal sheet has a coated resin film at the other surface where said white resin sheet is not present.

4.  An electrical/electronic device incorporating a visible light reflector as set forth in any one of claims 1 to 3.

5.  A visible light reflector superior in heat absorption ability **characterized by** comprising a metal sheet or a plated metal sheet having at one surface a white resin sheet having a diffuse reflectance of visible light at 555 nm of its surface of at least 0.70 and having an total infrared emissivity in the region of the wavelength of 600 to 3000 cm$^{-1}$ measured at a predetermined temperature of 80°C to 200°C of at least 0.60.

6. A visible light reflector as set forth in claim 5, **characterized by** having between said metal sheet or plated metal sheet and said white resin sheet a coated white resin film having a diffuse reflectance of visible light at 555 nm of at least 0.70.

7. A visible light reflector as set forth in claim 5 or 6, **characterized in that** said metal sheet or said plated metal sheet has a coated resin film at the other surface where said white resin sheet is not present.

8. An electrical/electronic device incorporating a visible light reflector as set forth in any one of claims 5 to 7.

# Fig.1

1

5(5')
3

# Fig.2

11

5(5')
7 } 13
3

# Fig.3

21

5(5')
7
3 } 23
9

# Fig.4

41  42  47(47')
49
43
30cm
45

# INTERNATIONAL SEARCH REPORT

| | International application No. |
|---|---|
| | PCT/JP2005/008332 |

| A. CLASSIFICATION OF SUBJECT MATTER |
|---|
| Int.Cl⁷ G02B5/02, F21V7/22 |

According to International Patent Classification (IPC) or to both national classification and IPC

| B. FIELDS SEARCHED |
|---|
| Minimum documentation searched (classification system followed by classification symbols) |
| Int.Cl⁷ G02B5/02, F21V7/22 |

| Documentation searched other than minimum documentation to the extent that such documents are included in the fields searched |
|---|
| Jitsuyo Shinan Koho 1922-1996 Jitsuyo Shinan Toroku Koho 1996-2005 |
| Kokai Jitsuyo Shinan Koho 1971-2005 Toroku Jitsuyo Shinan Koho 1994-2005 |

| Electronic data base consulted during the international search (name of data base and, where practicable, search terms used) |
|---|
| |

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2002-254558 A (MITSUBISHI CHEMICAL FUNCIONAL PRODUCTS, INC.), 11 September, 2002 (11.09.02), Page 2, right column, line 4 to page 3, right column, line 49 (Family: none) | 1-4,8 |
| Y | JP 10-244626 A (Nippon Steel Corp.), 14 September, 1998 (14.09.98), Page 3, right column, line 35 to page 4, left column, line 47; Fig. 1 (Family: none) | 1-4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 August, 2005 (01.08.05) | 16 August, 2005 (16.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/008332 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2-79303 A  (Toshiba Denzai Kabushiki Kaisha), 19 March, 1990 (19.03.90), Page 2, lower right column, line 3 to page 3, upper left column, line 14; Fig. 1 (Family: none) | 2,6 |
| Y | JP 9-63329 A  (Minnesota Mining and Manufacturing Co.), 07 March, 1997 (07.03.97), Page 5, left column, lines 7 to 13; Fig. 1 (Family: none) | 3,7 |
| X Y | JP 11-240099 A  (Sumitomo Metal Industries, Ltd.), 07 September, 1999 (07.09.99), page 2, right column, lines 21 to 38; page 4, right column, lines 33 to 45 (Family: none) | 5 6-8 |
| A | JP 10-177805 A  (Sharp Corp.), 30 June, 1998 (30.06.98), Page 3, left column, line 19 to right column, line 15; Fig. 1 (Family: none) | 1-4 |
| A | JP 11-125719 A  (Matsushita Electric Industrial Co., Ltd.), 11 May, 1999 (11.05.99), Page 3, left column, line 50 to right column, line 26; Fig. 1 (Family: none) | 1-4 |
| A | JP 1-187703 A  (Toshiba Corp.), 27 July, 1989 (27.07.89), Full text (Family: none) | 5-8 |

Form PCT/ISA/210 (continuation of second sheet) (January 2004)

## INTERNATIONAL SEARCH REPORT

| International application No. |
| --- |
| PCT/JP2005/008332 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

(See extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐  The additional search fees were accompanied by the applicant's protest.

☒  No protest accompanied the payment of additional search fees.

Form PCT/ISA/210 (continuation of first sheet (2)) (January 2004)

22

| **INTERNATIONAL SEARCH REPORT** | International application No. |
| --- | --- |
| | PCT/JP2005/008332 |

Continuation of Box No.III of continuation of first sheet(2)

The matter common to the independent claims 1 and 5 relates to a visible ray reflection plate having an excellent heat absorption ability and "having a white resin sheet arranged on a metal plate which may be plated".

However, the search has revealed that this common matter is not novel since it is disclosed in documents JP 2002-254558 A (Mitsubishi Kagaku Sanshi Corp.), 11 September, 2002 (11.09.02), page 2, right column, line 4 to page 3, right column, line 49 and JP 10-177805 A (Sharp Corp.), 30 June, 1998 (30.06.98), page 3, left column, line 19 to right column, line 15 and Fig. 1. As a result, this common matter makes no contribution over the prior art and cannot be special technical feature within the meaning of PCT Rule 13.2, second sentence.

Accordingly, no technical relationship within the meaning of PCT Rule 13.2 between the two groups of inventions described below can be seen. Consequently, it is obvious that these inventions to not satisfy the requirement of unity of invention.

1. claims 1-4
2. claims 5-8

Form PCT/ISA/210 (extra sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002090515 A
- JP 2002098808 A
- JP 2002098811 A
- JP 2002120330 A
- JP 2001071441 A
- JP 2001121665 A
- JP 2001226501 A
- JP 2001228313 A
- JP 2001297623 A
- JP 5093910 A
- JP 10199320 A
- JP 11050040 A
- JP 10244626 A
- JP 8174670 A
- JP 9241576 A

- JP 10251509 A
- JP 10337530 A
- JP 2000017466 A
- JP 2000248385 A
- JP 2000273659 A
- JP 2000282252 A
- JP 2000265282 A
- JP 2000167482 A
- JP 2001089868 A
- JP 2001316845 A
- JP 2002060959 A
- JP 2002266081 A
- JP 2002038280 A
- JP 2003253464 A